# EUROPEAN PATENT SPECIFICATION

(11) **EP 3 009 316 B1**
(45) Date of publication and mention of the grant of the patent: **06.09.2017**
(21) Application number: 14189117.6
(22) Date of filing: 16.10.2014
(51) Int. Cl.: B60T 13/68, B60W 30/18, B60W 10/26

(54) **Apparatus and method for controlling an engine**
Vorrichtung und Verfahren zur Steuerung eines Motors
Appareil et procédé de commande d'un moteur

(43) Date of publication of application: 20.04.2016
(73) Proprietor: KNORR-BREMSE Systeme für Nutzfahrzeuge GmbH, 80809 München (DE)
(72) Inventor: Balogh, Levente, 2310 Szigetszentmiklos (HU); Vig, Gabor, 1119 Budapest (HU)

(56) References cited:
- DE-B3-102008 007 877
- US-A- 5 317 998
- US-A1- 2009 157 232

## Description

The present invention relates to an apparatus and a method for controlling an engine and, in particular, to a method ensuring that an electronic parked safe state of a parking brake can be reached.

### Background

A parking brake of commercial vehicles has typically two safe states, a parked safe state and a released safe state. The transition between these states may be achieved by electronically controlled actuator, which are used to switch the safe state of the parking brake.

The actuation demand is evaluated based on a request of the driver or other control units of the vehicle. Under some conditions based on signals received from the vehicle, the parking brake control unit can request parking brake actuation automatically.

If an actuation request is received and the algorithm of the control unit decides that the parking brake shall be applied under the actual conditions the electronic actuators are energized by the control unit until the parking brake safe state is reached.

However, if for some reason the battery power is weak or the battery is faulty or there is a problem with the power supply of the actuators and the engine is stopped, it may happen that the electronically controlled actuation cannot be executed, because of the lack of power. In this case the vehicle might remain in the un-parked state although the parking safe state should have been activated.

On the other hand, if the parking brake system relies on pneumatically controlled actuators, as for example disclosed in DE 10 2008 007 877 B3, a default safe state can be reached, for example, simply by exhausting the system. This default safe state is ensured in these systems by springs that will automatically bring the system in a safe state whenever insufficient pressure is provided.

However, for electronically controlled systems, such default secure position is still missing. For example, a power failure in these systems will stop all electric activities or may even block the respective actuator(s).

Therefore, there is a demand for providing a secure mechanism to reach the parked safe state even if the electronics is malfunctioning.

### Summary of the Invention

The present invention solves the afore-mentioned problems by providing an apparatus according to claim 1 and a method according to claim 12. The dependent claims refer to specifically advantageous realizations of the subject matters of the independent claims.

The present invention relates to an apparatus for controlling an engine of a vehicle with an engine-driven power generator and a parking brake system which is electronically actuated using electric power provided by the power generator or a battery. The parking brake system allows for at least one safe state. The apparatus comprises: an interface, a detector unit and a control module. The interface is configured to receive a driver request to stop the engine. The detector unit is configured to detect a condition indicating that the electronically actuated parking brake system is able to reach the at least one safe state. The control module is configured to receive the driver request from the interface and the detected condition from the detector unit, wherein the control module is further configured to postpone the driver request to stop the engine and to maintain the engine running until the detector unit has detected the condition indicating that the at least one safe state can be reached.

The safe state can refer to any state, for which it is safe to stop the engine and may be, in particular, the parked safe state.

The present invention solves the above-mentioned problem by providing a detector unit, which is able to detect, whether the system has reached a safe state (i.e. the condition is met) or is able to reach this state so that it is safe to turn off the engine. If the system cannot confirm this situation, the apparatus is configured to postpone a driver request to stop the engine. As a result, the engine is kept running until the detector has detected the condition. Hence, even if a complete power failure occurs, a running engine still provides electric power sufficient to actuate the respective actuators in order to reach the safe state.

In yet another embodiment the detector unit is configured to receive power supply information indicating an available (electric) power supply from a battery of the vehicle. The detector unit may be configured to detect the condition only if the information indicate that sufficient power can be supplied to actuate the parking brake system to reach the at least one safe state.

Accordingly, the apparatus decides that it is safe to turn off the engine, because the available electric power is sufficient for reaching the safe state. It is understood that available power does not necessarily refer only to the state of the battery, but includes also an intact connection to the battery. For example, a broken connection from the battery does not make any power available and can thus not cause the detection of the condition. Moreover, a broken connection may not initiate a warning in advance. Therefore, according to embodiments the apparatus may wait until a positive confirmation is received.

In yet another embodiment the detector unit is configured to receive information from the parking brake system to detect the condition based on the received information. The information may indicate that the at least one safe state has been reached. The information may indicate that the at least one safe state has been reached.

In yet another embodiment a pressure employed by the parking brake system is monitored and the parking brake system is configured to issue a warning signal if the pressure is not sufficient to reach the safe state. The detector unit may be configured to receive the warning signal and to detect the condition only if the safe state has been reached. Hence, on the reception of the warning signal the detector unit will not detect the condition, but will await a positive confirmation that the safe state can be reached or has been reached. The pressure may, for example, refer to pressured air stored in air reservoirs used in a pneumatic braking systems.

In yet another embodiment the interface is configured to determine the driver request by receiving information from a driver operator device or to determine the driver request based on received information of an electronic control unit (e.g. via a vehicle communication bus). The electronic control unit may further refer to any electronic control unit (ECU) present in the vehicle.

A driver operator may relate to any interface operated by the driver. For example, the starter switch is a driver operator and its position may be detected. In addition, any kind of user-operated button or a remote control may define a driver operator.

In yet another embodiment the detector unit is configured to receive state information indicating related conditions effecting the at least one safe state. The detector unit may further be configured to detect the condition based on the received state information.

In yet another embodiment the state information includes information indicating that a status of the power supply and/or the battery voltage is not available.

In yet another embodiment the state information include at least one of the following: engine state information, vehicle parameters defining vehicle special modes, information on vehicle motion states, and information on vehicle failure states.

In yet another embodiment the control module is configured to modify the driver request to stop the engine, wherein the modification involves a predetermined delay of an execution of the driver request to stop the engine.

In yet another embodiment the parking brake system comprises a control module which is configured to control the parking brake system, wherein the detector unit is integrated in the control module.

The present invention relates also to a commercial vehicle with an engine-driven power generator and a parking brake system, which is electronically actuated using electric power provided by the power generator or a battery and which allows at least one safe state, and with an apparatus described before.

The present invention relates also to a method for controlling an engine of a vehicle with an engine-driven power generator and a parking brake system which is electronically actuated and allows at least one safe state. The method comprises: receiving a driver request to stop the engine, detecting a condition indicating that the electronically actuated parking brake system is able to reach the at least one safe state, and controlling the engine to postpone the driver request to stop the engine and to maintain the engine running until the condition indicating that the at least one safe state can be reached is detected.

This method may also be implemented in software or a computer program product and the order of steps may not be important to achieve the desired effect. Embodiments of the present invention can, in particular, be in an engine control unit or implemented by software or a software module in an ECU. Therefore, embodiment relate also to a computer program having a program code for performing the method, when the computer program is executed on a processor.

### Brief Description of the Drawings

Various embodiments of the present invention will be described in the following by way of examples only, and with respect to the accompanying drawings, in which:
- Fig. 1: depicts an apparatus for controlling an engine of a vehicle according to an embodiment of the present invention;
- Fig. 2: illustrates further optional conditions for deciding whether or not the engine can be stopped according to further embodiments; and
- Fig. 3: depicts a method for controlling an engine of a vehicle according to an embodiment of the present invention.

### Detailed Description

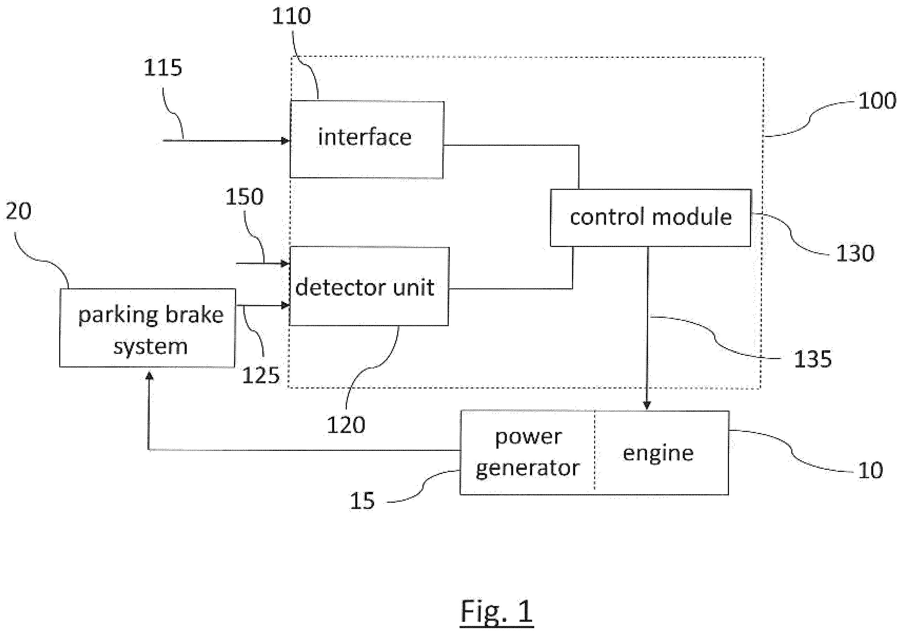

Fig. 1 depicts an apparatus 100 for controlling an engine 10 of a vehicle with an engine-driven power generator 15 and a parking brake system 20 which is electronically actuated using electric power supplied by the power generator 15 (or a battery) and allows at least one safe state. The apparatus comprises: an interface 110, a detector unit 120 and a control module 130. The interface 110 is configured to receive a driver request 115 to stop the engine 10. The detector unit 120 is configured to detect a condition indicating that the electronically actuated parking brake system 20 is able to reach the at least one safe state. The control module 130 is configured to receive the driver request 115 from the interface 110 and the detected condition from the detector unit 120, wherein the control module 130 is further configured to postpone the driver request 115 to stop the engine 10 and to maintain the engine 10 running until the detector unit 120 has detected the condition indicating that the at least one safe state can be reached.

Therefore, the interface 110 provides an input for a driver request 115. The engine 10 comprises a power generator 15 to generate electric power. The power generator 15 may or may not be part of the engine 10 and can also be set up as a separate component coupled to the engine 10. The power generator 15 is connected with the parking brake system 20 to provide electricity for actuating the parking brake system 20. The parking brake system 20 may optionally comprise or couple to a control module (not shown), which controls the parking brake 20 to place the vehicle in a safe state (e.g. the parked safe state).

The detector unit 120 receives from the parking brake system 20 a signal 125 indicative of whether the safe state has been reached or not. Optionally, the detector unit 120 may be incorporated into the parking brake system 20 or in its control unit (not shown). In either way, the detector unit 120 is configured to detect a condition that the safe state has been reached or can be reached with the available power. This condition may be indicated in the signal 125 received from the parking brake 20. On the other hand, if the detector unit 120 is integrated in the parking brake system 20, the condition may be derived from the activity of the parking brake system 20.

If the condition is has been detected a detection signal is provided for the control module 130. The control module 130 also receives from the interface 110 the driver request 115 and is configured to forward the stop request 135 only to the engine (or the engine controller) if the detector unit 120 has indicated that the parking brake system 20 is in the safe state or can be placed in the safe state using the available power.

Optionally, the driver request 115 can also be provided directly to the engine, wherein the control module 130 is configured to block the execution of the driver request 115 for as long as the parking brake has not yet reached the safe state or cannot yet be placed in the safe state using the available power.

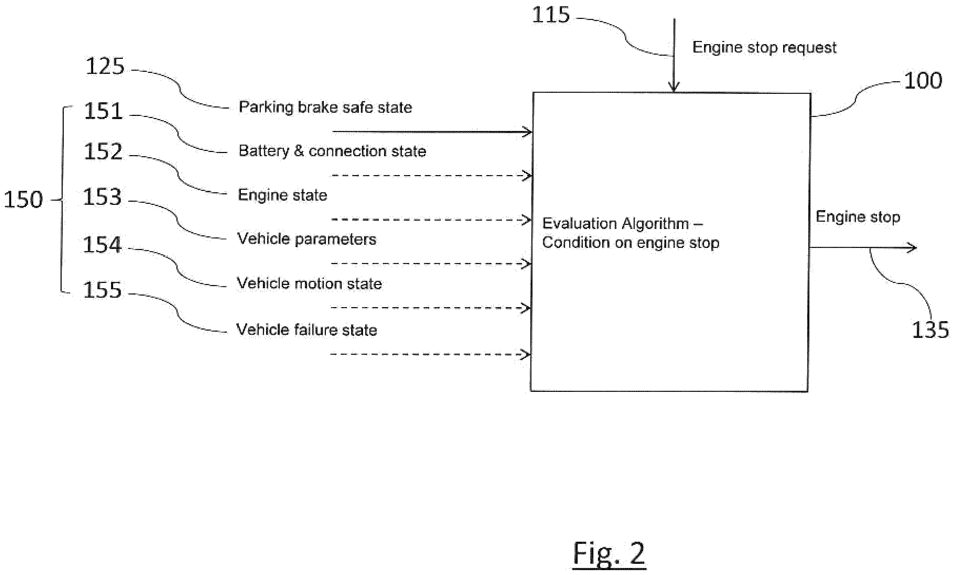

Fig. 2 depicts further optional conditions, which are taken into consideration by the control module 130. In particular, the apparatus 100 as depicted in Fig. 2 comprises an input to receive the driver request 115 and an output to send the engine stop signal 135 to the engine 10 (not shown in Fig. 2). The control module 130 of the apparatus 100 is configured to perform an evaluation algorithm to determine a condition for the engine stop. The evaluation algorithm includes the information 125 indicating that the parking brake system 20 has been reached or can reach the safe state. This information may be submitted directly from the parking brake system 20.

Optionally, the apparatus 100 receives further information about the battery and/or the connection state of the battery to the systems of the vehicle. This state information include, e.g., information about a power failure or a connection fault to the battery, in which case the engine should run until the safe state has been finally reached.

Furthermore, the apparatus 100 receives optional engine state information 152. The engine state information indicates a state of the engine, which includes, for example, information about the speed the engine is running to ensure that the engine can provide enough power to place the parking brake system 20 in the safe state.

Optionally, the apparatus 100 receives vehicle parameters 153. The vehicle parameters include, for example, information about a pressure level, e.g. in pressured air reservoirs.

Further vehicle parameter refer to particular modes (e.g. a workshop mode or an analysis mode or a maintenance mode) in which the vehicle can be placed, e.g. for analysis. Also the ignition key position may define a special mode.

Optionally, the apparatus 100 receives vehicle motion state information 154. The vehicle motion state information includes, for example, information indicating whether the vehicle is moving or is not moving.

Optionally, the apparatus 100 receives vehicle failure state information 155. The vehicle failure state information includes, for example, information about errors or other failure detected in the vehicle, which may be detected in other control units. Such failure may result in a decision to run the engine for as long as the safe state has been reached.

These further information may be received via a separate interface or an input of the detector unit 120. The apparatus 100 may also be connected to the vehicle bus connecting various control units of the vehicle to receive all kind of information.

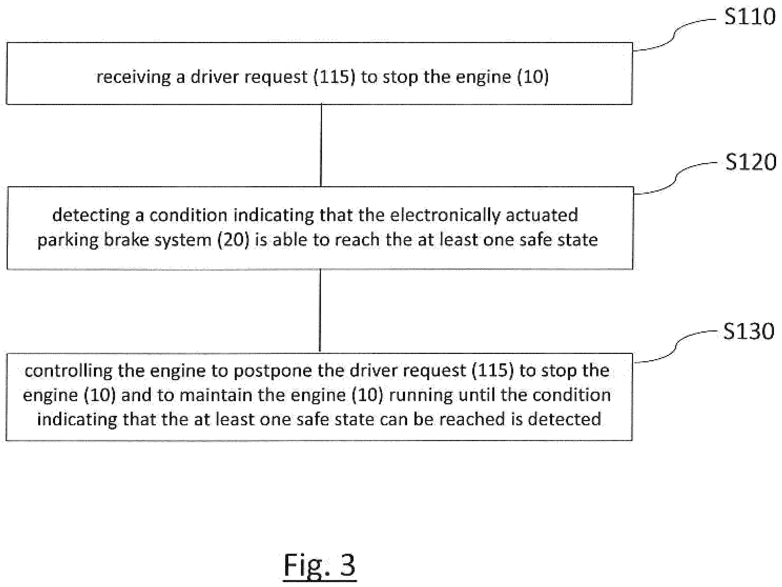

Fig. 3 depicts a flow diagram of a method for controlling the engine 10 of a vehicle with an engine-driven power generator 15 and a parking brake system 20 which is electronically actuated and allows at least one safe state. The method comprises: receiving S110 a driver request 115 to stop the engine 10; detecting S120 a condition indicating that the electronically actuated parking brake system 20 is able to reach the at least one safe state; and controlling the engine S130 to postpone the driver request 115 to stop the engine 10 and to maintain the engine 10 running until the condition indicating that the at least one safe state can be reached is detected.

This method may also be a computer-implemented method. A person of skill in the art would readily recognize that steps of various above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the a computer or processor.

Further advantageous embodiments of the present invention can be summarized as follows.

One embodiment relates to a method of controlling the operation of the vehicle engine corresponding to an electric power generation for the vehicle and its battery, having an interface 110 to determine the driver request 115 to stop the running of the engine 10, and an interface 120 to determine an electronic parking brake condition on the engine stop (e.g. the condition detected by the detector unit 120), characterized in that the request 115 to stop the engine 10 is not executed, if proper power supply from the battery to the electronic parking brake is not ensured or not known and the electronic parking brake condition on engine stop is not fulfilled.

Yet another embodiment relates to a method characterized in that the electronic parking brake condition on the engine stop is the parking brake status directly or an indirect information containing further conditions related to the vehicle and the parking brake system.

Yet another embodiment relates to a method characterized in that the request 115 on the engine stop can be determined based on a direct driver operator device (e.g. a key, a button, a remote control) or based on an internal decision of an electronic control unit of the vehicle.

Yet another embodiment relates to a method characterized in that the power supply of the electronic parking brake as well as the battery voltage is monitored and the engine stop request of the driver is executed if proper power supply from the battery to the parking brake is ensured based on the result of this monitoring.

Yet another embodiment relates to a method characterized in that the engine stop request of the driver and/or other control unit(s) are monitored and the transmitted signal is modified based on the result of this monitoring.

Yet another embodiment relates to a method characterized in that the safe state of the parking brake can be monitored based on sensor measurement or can be received as an electronic signal from other control units or can be estimated based on a signal transmitted by another control unit.

Yet another embodiment relates to a method characterized in that the state of the engine is monitored and the electronic parking brake condition on engine stop is modified based on the result of this monitoring.

Yet another embodiment relates to a method characterized in that the vehicle special modes defined by parameters are considered and the electronic parking brake condition on engine stop is modified based on that.

Yet another embodiment relates to a method characterized in that the vehicle motion state is monitored and the electronic parking brake condition on engine stop is modified based on the result of this monitoring.

Yet another embodiment relates to a method characterized in that active detected failures in the vehicle system are monitored and the electronic parking brake condition on engine stop is modified based on the result of this monitoring.

Thus, the present invention may provide a solution of the above-mentioned problem in that a parking brake safe state may be detected by measuring the pressure in the parking brake chamber. If this pressure indicates that the parked safe state of the parking brake is not reached than an electronic signal is transmitted from the control unit which indicates that the engine stop is not allowed.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### List of reference signs

- 10: engine
- 15: engine-driven power generator
- 20: parking brake system
- 100: apparatus
- 110: interface
- 115: driver request
- 120: detector unit
- 130: control module
- 150: state information
- 151: power supply information
- 152: engine state information
- 153: vehicle parameter
- 154: information on vehicle motion states
- 155: information on vehicle failure states

## Claims

1. An apparatus (100) for controlling an engine (10) of a vehicle with an engine-driven power generator (15) and a parking brake system (20) which is electronically actuated using electric power provided by the power generator (15) or a battery, and which allows for at least one safe state, the apparatus (100) comprising:
an interface (110) for receiving a driver request (115) to stop the engine (10);
a detector unit (120) for detecting a condition indicating that the electronically actuated parking brake system (20) is able to reach the at least one safe state; and
a control module (130) configured to receive the driver request (115) from the interface (110) and the detected condition from the detector unit (120),
wherein the control module (130) is further configured to postpone the driver request (115) to stop the engine (10) and to maintain the engine (10) running until the detector unit (120) has detected the condition indicating that the at least one safe state can be reached.

2. The apparatus (100) according to claim 1, wherein a power supply from a battery is monitored to obtain an available power supply, and the detector unit (120) is configured to receive power supply information (151) indicating the available power supply from the battery of the vehicle and wherein the detector unit (20) is configured to detect the condition only if the information (151) indicate sufficient power can be supplied to actuate the parking brake system (20) to reach the at least one safe state.

3. The apparatus (100) according to claim 1 or claim 2, wherein the parking brake is monitored, and the detector unit (120) is configured to receive information (125) from the parking brake system (20), the information indicating that the at least one safe state has been reached, and to detect the condition based on the received information (125).

4. The apparatus (100) according to claim 3, wherein a pressure employed by the parking brake system (20) is monitored and the parking brake system (20) is configured to issue a warning signal if the pressure is not sufficient to reach the safe state, and wherein the detector unit (120) is configured to receive the warning signal and to detect the condition only if the safe state has been reached.

5. The apparatus (100) according to one of the preceding claims, wherein the interface (110) is configured to determine the driver request (115) by receiving information from a driver operator device or to determine the driver request (115) based on received information of an electronic control unit.

6. The apparatus (100) according to one of the preceding claims, wherein the detector unit (120) is configured to receive state information (150) indicating related conditions effecting the at least one safe state, and wherein the detector unit (120) is further configured to detect the condition based on the received state information (150).

7. The apparatus (100) according to claim 6, wherein the state information (150) includes information indicating that a status of the power supply and/or the battery voltage is not available.

8. The apparatus (100) according to claim 6 or claim 7, wherein the state information (150) include at least one of the following: engine state information (152), vehicle parameters (153) defining vehicle special modes, information on vehicle motion states (154), and information on vehicle failure states (155).

9. The apparatus (100) according to one of the preceding claims, wherein the control module (130) is configured to modify the driver request (115) to stop the engine (10), wherein the modification involves a predetermined delay of an execution of the driver request (115) to stop the engine (10).

10. The apparatus (100) according to one of the preceding claims, wherein the parking brake system (20) comprises a control module configured to control the parking brake, and wherein the detector unit (120) is integrated in the control module.

11. A commercial vehicle with an engine-driven power generator (15) and a parking brake system (20), which is electronically actuated using electric power provided by the power generator (15) or of a battery and which allows at least one safe state, and with an apparatus according to one of claims 1 to 10.

12. A method for controlling an engine (10) of a vehicle with an engine-driven power generator (15) and a parking brake system (20) which is electronically actuated and allows at least one safe state, the method comprising:
receiving (S110) a driver request (115) to stop the engine (10);
detecting (S120) a condition indicating that the electronically actuated parking brake system (20) is able to reach the at least one safe state; and
controlling the engine (S130) to postpone the driver request (115) to stop the engine (10) and to maintain the engine (10) running until the condition indicating that the at least one safe state can be reached is detected.

13. A computer program having a program code for performing the method according to claim 12, when the computer program is executed on a processor.

## Patentansprüche

1. Vorrichtung (100) zum Steuern eines Motors (10) eines Fahrzeugs mit einem motorgetriebenen Stromgenerator (15) und einer Feststellbremsanlage (20), die mit vom Stromgenerator (15) oder von einer Batterie geliefertem Strom elektronisch betätigt wird und wenigstens einen sicheren Zustand zulässt, wobei die Vorrichtung (100) Folgendes umfasst:
eine Schnittstelle (110) zum Empfangen einer Fahreranforderung (115) zum Stoppen des Motors (10);
eine Sensoreinheit (120) zum Erfassen einer Bedingung, die angibt, dass die elektronisch betätigte Feststellbremsanlage (20) den wenigstens einen sicheren Zustand erreichen kann; und
ein zum Empfangen der Fahreranforderung (115) von der Schnittstelle (110) und der erfassten Bedingung von der Sensoreinheit (120) ausgebildetes Steuermodul (130),
wobei das Steuermodul (130) ferner zum Aufschieben der Fahreranforderung (115) zum Stoppen des Motors (10) und zum Am-Laufen-Halten des Motors (10), bis die Sensoreinheit (120) die Bedingung, die angibt, dass der wenigstens eine sichere Zustand erreicht werden kann, erfasst hat, ausgebildet ist.

2. Vorrichtung (100) nach Anspruch 1, wobei eine Stromversorgung von einer Batterie überwacht wird, um eine verfügbare Stromversorgung zu erhalten, und die Sensoreinheit (120) zum Empfangen einer die verfügbare Stromversorgung von der Batterie des Fahrzeugs angebenden Stromversorgungsinformation (151) ausgebildet ist und wobei die Sensoreinheit (20) zum Erfassen der Bedingung nur dann, wenn die Information (151) angibt, dass ausreichend Strom geliefert werden kann, um die Feststellbremsanlage (20) zu betätigen, damit der wenigstens eine sichere Zustand erreicht wird, ausgebildet ist.

3. Vorrichtung (100) nach Anspruch 1 oder Anspruch 2, wobei die Feststellbremse überwacht wird und die Sensoreinheit (120) zum Empfangen einer Information (125) von der Feststellbremsanlage (20), wobei die Information angibt, dass der wenigstens eine sichere Zustand erreicht worden ist, und zum Erfassen der Bedingung auf der Basis der empfangenen Information (125) ausgebildet ist.

4. Vorrichtung (100) nach Anspruch 3, wobei ein von der Feststellbremsanlage (20) eingesetzter Druck überwacht wird und die Feststellbremsanlage (20) zum Ausgeben eines Warnsignals, wenn der Druck nicht ausreicht, um den sicheren Zustand zu erreichen, ausgebildet ist, und wobei die Sensoreinheit (120) zum Empfangen des Warnsignals und zum Erfassen der Bedingung nur dann, wenn der sichere Zustand erreicht worden ist, ausgebildet ist.

5. Vorrichtung (100) nach einem der vorhergehenden Ansprüche, wobei die Schnittstelle (110) zum Ermitteln der Fahreranforderung (115) durch Empfangen einer Information von einer Fahrerbedieneinrichtung oder zum Ermitteln der Fahreranforderung (115) auf der Basis einer empfangenen Information einer elektronischen Steuereinheit ausgebildet ist.

6. Vorrichtung (100) nach einem der vorhergehenden Ansprüche, wobei die Sensoreinheit (120) zum Empfangen einer Zustandsinformation (150), die verknüpfte Bedingungen, die den wenigstens einen sicheren Zustand bewirken, angibt, ausgebildet ist, und wobei die Sensoreinheit (120) ferner zum Erfassen der Bedingung auf der Basis der empfangenen Zustandsinformation (150) ausgebildet ist.

7. Vorrichtung (100) nach Anspruch 6, wobei die Zustandsinformation (150) eine Information umfasst, die angibt, dass ein Status der Stromversorgung und/oder der Batteriespannung nicht verfügbar ist.

8. Vorrichtung (100) nach Anspruch 6 oder Anspruch 7, wobei die Zustandsinformation (150) wenigstens ein Element der folgenden umfasst:
Motorzustandsinformation (152), Fahrzeugparameter (153) zum Definieren von Fahrzeugspezialmodi, Information zu Fahrzeugbewegungszuständen (154) und Information zu Fahrzeugfehlerzuständen (155).

9. Vorrichtung (100) nach einem der vorhergehenden Ansprüche, wobei das Steuermodul (130) zum Ändern der Fahreranforderung (115) zum Stoppen des Motors (10) ausgebildet ist, wobei die Änderung eine vorgegebene Verzögerung einer Ausführung der Fahreranforderung (115) zum Stoppen des Motors (10) beinhaltet.

10. Vorrichtung (100) nach einem der vorhergehenden Ansprüche, wobei die Feststellbremsanlage (20) ein zum Steuern der Feststellbremse ausgebildetes Steuermodul umfasst, und wobei die Sensoreinheit (120) in das Steuermodul integriert ist.

11. Nutzfahrzeug mit einem motorgetriebenen Stromgenerator (15) und einer Feststellbremsanlage (20), die mit vom Stromgenerator (15) oder von einer Batterie geliefertem Strom elektronisch betätigt wird, und die wenigstens einen sicheren Zustand zulässt, und mit einer Vorrichtung nach einem der Ansprüche 1 bis 10.

12. Verfahren zum Steuern eines Motors (10) eines Fahrzeugs mit einem motorgetriebenen Stromgenerator (15) und einer Feststellbremsanlage (20), die elektronisch betätigt wird und wenigstens einen sicheren Zustand zulässt, wobei das Verfahren Folgendes umfasst:
Empfangen (S110) einer Fahreranforderung (115) zum Stoppen des Motors (10);
Erfassen (S120) einer Bedingung, die angibt, dass die elektronisch betätigte Feststellbremsanlage (20) den wenigstens einen sicheren Zustand erreichen kann; und
Steuern des Motors (S130) zum Aufschieben der Fahreranforderung (115) zum Stoppen des Motors (10) und zum Am-Laufen-Halten des Motors (10), bis die Bedingung, die angibt, dass der wenigstens eine sichere Zustand erreicht werden kann, erfasst wird.

13. Computerprogramm mit einem Programmcode zum Ausführen des Verfahrens nach Anspruch 12, wenn das Computerprogramm auf einem Prozessor ausgeführt wird.

## Revendications

1. Installation (100) de commande d'un moteur (10) d'un véhicule, comprenant un groupe (15) électrogène, entraîné par un moteur, et un système (20) de frein de stationnement, qui est actionné électroniquement, en utilisant le courant électrique fourni par le groupe (15) électrogène ou par une batterie et qui permet d'avoir au moins un état sûr, l'installation comprenant :
une interface (110) de réception d'une demande (115) du conducteur d'arrêter le moteur (10) ;
une unité (120) de détecteur pour détecter une condition indiquant que le système (20) de frein de stationnement, actionné électroniquement, est apte à atteindre le au moins un état sûr et
un module (130) de commande configuré pour recevoir la demande (115) du conducteur de l'interface (110) et la condition détectée de l'unité (120) de détecteur,
dans laquelle le module (130) de commande est configuré en outre pour différer la demande (115) du conducteur d'arrêter le moteur (10) et pour continuer à faire tourner le moteur (10) jusqu'à ce que l'unité (120) de détecteur ait détecté la condition indiquant que le au moins un état sûr peut être atteint.

2. Installation (100) suivant la revendication 1, dans laquelle une alimentation en courant par une batterie est contrôlée, qu'une alimentation en courant est disponible et l'unité (120) de détecteur est configurée pour recevoir une information (151) d'alimentation en courant, indiquant la disponibilité de l'alimentation en courant à partir de la batterie du véhicule et dans laquelle l'unité (20) de détecteur est configurée pour détecter la condition seulement si l'information (151) indique qu'un courant suffisant peut être fourni pour actionner le système (20) de frein de stationnement, afin d'atteindre le au moins un état sûr.

3. Installation (100) suivant la revendication 1 ou la revendication 2, dans laquelle le frein de stationnement est contrôlé et l'unité (120) de détecteur est configurée pour recevoir de l'information (125) du système (20) de frein de stationnement, l'information indiquant que le au moins un état sûr a été atteint, et pour détecter la condition sur la base de l'information (125) reçue.

4. Installation (100) suivant la revendication 3, dans laquelle une pression employée par le système (20) de frein de stationnement est contrôlée et le système (20) de frein de stationnement est configuré pour émettre un signal d'avertissement, si la pression n'est pas suffisante pour atteindre l'état sûr et dans laquelle l'unité (120) de détecteur est configurée pour recevoir le signal d'avertissement et pour détecter la condition seulement si l'état sûr a été atteint.

5. Installation (100) suivant l'une quelconque des revendications précédentes, dans laquelle l'interface (110) est configurée pour déterminer la demande (115) du conducteur, en recevant de l'information d'un dispositif d'opérateur du conducteur ou pour déterminer la demande (115) du conducteur, sur la base d'une information reçue d'une unité électronique de commande.

6. Installation (100) suivant l'une quelconque des revendications précédentes, dans laquelle l'unité (120) de détecteur est configurée pour recevoir une information (150) d'état, indiquant des conditions apparentées affectant le au moins un état sûr, et dans laquelle l'unité (120) de détecteur est configurée en outre pour détecter la condition, sur la base de l'information (150) d'état reçue.

7. Installation (100) suivant la revendication 6, dans laquelle l'information (150) d'état comprend une information indiquant qu'un état de l'alimentation en courant et/ou de la tension de la batterie n'est pas disponible.

8. Installation (100) suivant la revendication 6 ou la revendication 7, dans laquelle l'information (150) d'état comprend au moins l'une des suivantes: une information (152) de l'état du moteur, des paramètres (153) du véhicule définissant des modes spéciaux du véhicule, une information sur des modes (154) de déplacement du véhicule et une information sur des états (155) de défaillance du véhicule.

9. Installation (100) suivant l'une des revendications précédentes, dans laquelle le module (130) de commande est configuré pour modifier la demande (115) du conducteur d'arrêter le moteur (10), la modification impliquant un retard déterminé à l'avance d'exécution de la demande (115) du conducteur d'arrêter le moteur (10).

10. Installation (100) suivant l'une des revendications précédentes, dans laquelle le système (20) de freinage de stationnement comprend un module de commande configuré pour commander le frein de stationnement et dans laquelle l'unité (120) de détecteur est intégrée au module de commande.

11. Véhicule utilitaire ayant un groupe (15) électrogène entraîné par un moteur et un système (20) de frein de stationnement, qui est actionné électroniquement en utilisant du courant électrique fourni par le groupe (15) électrogène ou du courant d'une batterie et qui permet d'avoir au moins un état sûr, et comprenant une installation suivant l'une des revendications 1 à 10.

12. Procédé de commande d'un moteur (10) d'un véhicule ayant un groupe (15) électrogène entraîné par un moteur et un système (20) de freinage de stationnement, qui est actionné électroniquement et qui permet d'avoir au moins un état sûr, le procédé comprenant :
la réception (S110) d'une demande (115) du conducteur d'arrêter le moteur (10) ;
la détection (S120) d'une condition indiquant que le système (20) de frein de stationnement actionné électroniquement est apte à atteindre le au moins un état sûr et
la commande du moteur (S130) pour différer la demande (115) du conducteur d'arrêter le moteur (10) et pour continuer à faire tourner le moteur (10) jusqu'à la détection de la condition indiquant que le au moins un état sûr peut être atteint.

13. Programme d'ordinateur ayant un code de programme pour effectuer le procédé suivant la revendication 12, lorsque le programme d'ordinateur est exécuté dans un processeur.
